# EUROPEAN PATENT SPECIFICATION

(11) **EP 1 680 270 B1**
(45) Date of publication and mention of the grant of the patent: **12.12.2007**
(21) Application number: 03758450.5
(22) Date of filing: 29.10.2003
(51) Int. Cl.: B29D 30/00, B29C 35/08

(54) **METHOD AND PLANT FOR MANUFACTURING A PNEUMATIC TYRE FOR VEHICLE WHEELS**
VERFAHREN UND ANLAGE ZUR HERSTELLUNG VON FAHRZEUGLUFTREIFEN
PROCEDE ET INSTALLATION POUR LA FABRICATION D'UN PNEUMATIQUE POUR ROUE DE VEHICULE

(43) Date of publication of application: 19.07.2006
(73) Proprietor: Pirelli Tyre S.p.A., 20126 Milano (IT)
(72) Inventor: CARETTA, Renato, I-20126 Milano (IT); MARCHINI, Maurizio, I-20126 Milano (IT)
(74) Representative: Giannesi, Pier Giovanni
(86) International application number: PCT/IB2003/004790
(87) International publication number: WO 2005/042237

(56) References cited:
- EP-A- 0 729 825
- GB-A- 1 202 702
- US-A- 844 820
- US-A- 3 788 785

## Description

The present invention relates to a method and a plant for manufacturing a pneumatic tyre for vehicle wheels.

In the production cycle of a pneumatic tyre it is provided that subsequently to a building step in which the different components of the tyre itself are manufactured and/or assembled, a moulding and vulcanisation process should be also carried out, which process aims at defining the tyre structure according to a desired geometry usually having a particular tread pattern.

For the purpose, the tyre is enclosed in a moulding cavity defined at the inside of a vulcanisation mould and shaped according to the geometric configuration of the outer surfaces of the tyre to be obtained.

A pneumatic tyre generally comprises a carcass of a toroidal ring-shaped conformation, including one or more carcass plies reinforced with reinforcing cords lying in radial planes, i.e. containing the rotation axis of the tyre. Each carcass ply has its ends integrally associated with at least one annular preferably metallic reinforcing structure, usually known as bead core, constituting the reinforcement at the beads, i.e. the radially internal extremities of said tyre the function of which is to enable assembling of the tyre with a corresponding mounting rim. A band of elastomer material, known as tread band, is applied crownwise to said carcass, and in said tread band at the end of the vulcanisation and moulding steps a raised pattern is formed for ground contact. A reinforcing structure usually known as belt structure is placed between the carcass and tread band. The belt structure in the case of tyres for cars usually comprises at least two radially superposed strips of rubberised fabric material provided with reinforcing cords, usually of metal, disposed parallel to each other in each strip and crossed with the cords of the adjacent strip, preferably symmetrically disposed relative to the equatorial plane of the tyre. Preferably said belt structure, at a radially external position, further comprises, at least at the ends of the underlying strips, a third layer of textile or metallic cords, that are disposed circumferentially (at 0 degrees).

Finally, in tyres of the tubeless type, i.e. devoid of an air tube, a radially internal layer is present which is generally referred to as "liner" and has imperviousness features to ensure air-tightness to the tyre.

It is to be pointed out at this point that to the aims of the present invention by the term "elastomer material" it is intended a composition comprising at least one elastomer polymer and at least one reinforcing filler. Preferably, this composition further comprises additives such as cross-linking and/or plasticizing agents for example. Due to the presence of the cross-linking agents, this material can be cross-linked through heating, so as to form the final manufactured article.

There are moulding and vulcanisation methods in which a green tyre placed on a rigid toroidal support is arranged within the mould. Said methods are preferably employed for tyres that are produced, following recent building processes, starting from a limited number of elementary semi-finished products fed onto a toroidal support the outer profile of which matches that of the radially internal surface of the tyre of which production is wished. Said toroidal support is handled, preferably by a robotized system, between a plurality of stations in each of which, through automated sequences, a particular building step of the tyre is carried out (see document EP 0 928 680 in the name of the same Applicant, for example).

The International Patent Application No. PCT/IB 02/04833 in the Applicant's name discloses a method of moulding and vulcanising a tyre for vehicle wheels comprising the steps of: building a green tyre on a toroidal support the outer surface of which substantially matches an inner surface of said green tyre; heating said toroidal support to transmit heat to the inner tyre surface in contact with said toroidal support; pressing said inner surface of said green tyre against said outer surface of said toroidal support by means of at least one secondary working fluid under pressure; pressing an outer surface of said green tyre against the walls of a moulding cavity defined in a vulcanisation mould, by means of a primary working fluid under pressure passing through at least one diffusion gap between said outer surface of said toroidal support and said inner surface of said green tyre; said primary working fluid under pressure being heated so as to supply heat to said green tyre to cause vulcanisation of same.

The Applicant could verify that by a method of the above illustrated type, at least one partial vulcanisation of the innermost layer of the tyre itself and of the bead region is obtained. In this way relative flowing of the different components of the green tyre of elastomer material due to the inner vulcanisation pressure is prevented from occurring above all in the first minutes of this process, i.e. when the plastic features of the elastomer material are higher. Thus it is ensured that these components will substantially keep their arrangement as stated in the design specifications at the end of the moulding and vulcanisation steps. In particular, the carcass ply or plies substantially will keep their position at the bead region determining stretching of the carcass ply or plies in accordance with said specifications.

In addition, in the bead region phenomena of lack or uneven accumulation of material, which could result in generation of steps or discontinuities in the bead itself, are avoided.

Finally, the at least partial vulcanisation of the radially internal layer of the carcass structure allows achievement of at least two important advantages.

In fact, the at least partly vulcanised liner becomes substantially impermeable to the heating fluid employed in the true tyre vulcanisation. In this way the fluid usually containing steam is prevented from penetrating through the liner until reaching the radially outermost tyre layers causing defects in the finished tyre and oxidation of the metallic parts present in the tyre itself, the belts for example.

A further advantage resulting from an at least partial vulcanisation of the liner before the moulding and vulcanisation steps resides in a particularly uniform vulcanisation capable of enabling an optimal tyre finishing both in the radially internal surface and the radially and axially external surfaces. In fact, the working fluid in the moulding and vulcanisation conditions is directly in contact with parts of the tyre that have already been partly vulcanised and therefore show a non plastic but almost elastic behaviour of the material. In this case an even distribution against the mould of the elastomer material belonging to the outermost tyre layers occurs.

The Applicant in a tyre production process in which tyre building is carried out on a toroidal support, has felt a need for reducing the production times of each tyre in order to increase productivity of the plant itself and at the same time ensure a correct geometry of the bead and connection of the latter with the carcass ply/plies which must substantially remain those provided by the design conditions. These times are mostly dependent on the moulding and vulcanisation times that are critical in a modern production system like the one described in document WO 01/39963 for example, in the name of the same Applicant. A reduction in the moulding and vulcanisation time would therefore enable an immediate reduction in the overall production time.

The Applicant has therefore perceived that by introducing at least one partial vulcanisation step during tyre building on a toroidal support, it is possible to reduce the overall production time lowering the overall time of the final moulding and vulcanisation step, while substantially keeping the features of the bead and the carcass ply/plies linked thereto unchanged with respect to the design specifications.

In more detail the Applicant has found that by building at least one carcass structure on a toroidal support and submitting the latter to a first vulcanisation step exerting a pressure on the structure itself from the outside to the inside, an at least partly vulcanised carcass structure is obtained which is stable in its geometry and suitable for completing building of the tyre. Subsequently, a second vulcanisation step accompanied by moulding of the tread band and sidewalls allows a finished tyre to be obtained in a more reduced overall period of time.

In a first aspect, the invention relates to a method of manufacturing pneumatic tyres for vehicle wheels, comprising the following steps:
- assembling a tyre being processed on a toroidal support having an outer surface the shape of which substantially matches that of an inner surface of the tyre itself, building at least one carcass structure on said support, said carcass structure comprising a radially internal layer containing elastomer material in contact with the outer surface of the toroidal support, at least one carcass ply the ends of which are associated with at least one bead structure comprising at least one annular reinforcing structure and an elastomer filler;
- closing the toroidal support and the tyre under processing assembled therewith into a hermetically sealed cavity;
- admitting a working fluid into said cavity pressing the inner surface of said tyre being processed against the outer surface of said toroidal support;
- supplying heat to said tyre being processed to start vulcanisation of at least one elastomer element of the carcass structure selected between said elastomer filler and said radially internal layer;
- extracting said toroidal support carrying said tyre being processed, from said cavity;
- completing building of the tyre being processed;
- closing the built tyre and the toroidal support within a moulding cavity defined in a vulcanisation mould, said moulding cavity having walls conforming in shape to an outer surface of the tyre when vulcanisation has been completed;
- moulding the tyre by pressing it with its outer surface against the walls of the moulding cavity;
- supplying heat to the built tyre to vulcanise it.

In a second aspect the invention relates to a plant for manufacturing pneumatic tyres, comprising:
- at least one building station comprising an automated apparatus for handling a toroidal support on which each green tyre is built, said toroidal support having an outer surface the shape of which substantially matches that of an inner surface of the tyre itself;
- at least one apparatus to carry out a partial vulcanisation of said green tyre being processed, said apparatus comprising: at least one hermetically sealed cavity set to receive the toroidal support carrying the tyre being processed, at least one heating device to generate heat at least on the surface of the toroidal support, at least one device for feeding working fluid under pressure, associated with said cavity to press the radially internal surface of the tyre being processed against the radially external surface of said toroidal support;
- at least one apparatus for vulcanising and moulding said green tyre once it has been built.

In a third aspect, the invention relates to an apparatus for carrying out a partial vulcanisation of a green pneumatic tyre being processed, said apparatus comprising: at least one hermetically sealed cavity set to receive a toroidal support carrying the tyre being processed, at least one heating device to generate heat at least on the surface of the toroidal support, at least one device for feeding a working fluid under pressure and associated with said cavity to press the radially internal surface of the tyre being processed against the radially external surface of said toroidal support.

Further features and advantages of the invention will become more apparent from the detailed description of some preferred but not exclusive embodiments of a method and a plant for manufacturing a pneumatic tyre for vehicle wheels in accordance with the present invention. This description will be set out hereinafter with reference to the accompanying drawing, given by way of non-limiting example, in which:

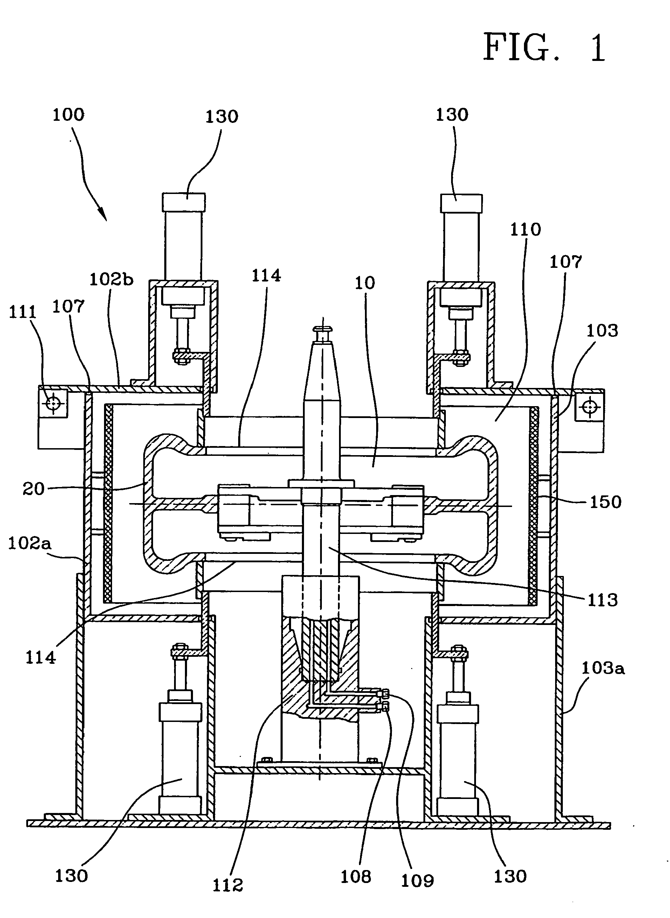

- Fig. 1 is a diagrammatic vertical view partly in section of a preferred embodiment of an apparatus belonging to the plant in accordance with the invention.

A tyre manufactured using the plant and method in reference essentially comprises a carcass structure formed of one or more carcass plies having the respective opposite end edges in engagement with annular reinforcing structures integrated into inner circumferential regions of the tyre, usually identified as "bead structure" or "beads". Each annular reinforcing structure comprises one or more circumferential annular inserts or bead cores, preferably made of metal, and one or more filling inserts coupled with the carcass plies. Said carcass structure is preferably internally coated with a so-called "liner", i.e. a thin layer of elastomer material that, when vulcanisation is over, will be airtight so as to ensure keeping of the tyre inflation pressure in use.

Applied to the carcass structure at a radially external position is a belt structure comprising one or more belt layers having respectively crossed reinforcing cords, and a possible auxiliary belt layer comprising one or more cords of textile or metal material spirally wound up around the geometric axis of the tyre. An under-belt insert may be interposed between each of the side edges of the belt structure and the carcass structure.

The tyre further comprises a tread band applied to the belt structure at a radially external position, a pair of anti-abrasion inserts each externally applied close to one of the tyre beads, and a pair of sidewalls each of which covers the carcass structure at a laterally external location.

The plant in accordance with the invention for manufacturing tyres preferably is of a highly automated type as described in document WO 01/39963 in the name of the same Applicant. More specifically said plant preferably comprises a plurality of work stations, herein not shown, in which the green tyre is built.

Each work station comprises an automated apparatus, providing use of robots with several rotation axes for example, for handling of the tyre during processing.

Preferably each tyre being processed contemplates engagement on a toroidal support 10 having an outer surface conforming in shape to the inner surface of the green tyre to be built, the green tyre being therefore conveniently obtained directly on the support itself.

In this way the toroidal support 10 is advantageously exploited as a rigid shape for laying the different components thereon, such as liner, carcass plies, reinforcing structures at the beads, belt strips, sidewalls, and tread band, that co-operate in forming the tyre itself. More specifically, said tyre components are preferably made by laying of semi-finished elements on said toroidal support 10, such as, by way of example, elongated elements of elastomer material, strip-like elements of elastomer material internally comprising a plurality of textile or metallic cords, metallic cords preferably made of high tensile steel. Further details on the laying modalities of the tyre components on the toroidal support 10 are for example described in the European Patent Application issued under No. 0 929 680 in the name of the same Applicant.

Said plant further comprises a moulding and vulcanisation station in which the green tyres, once building of same has been completed, are moulded and vulcanised to obtain a desired tread pattern together with cross-linking of the elastomer material of which the tyre is made.

In accordance with the invention, said plant comprises at least one apparatus 100 intended for partial vulcanisation of a green tyre still under processing, or more specifically for partial vulcanisation of at least the carcass structure or bead region and the inner surface of the carcass structure itself, once assembling of the latter on said toroidal support 10 has occurred.

More particularly said apparatus 100 comprises a lower half 102A and an upper half 102B, delimiting at least one inner cavity 110, advantageously hermetically sealed, said halves 102A and 102B being in engagement with a bedplate 103A and with a closing portion 103B belonging to the lower half 102A itself, and at least one sealing element 107 placed between the opposite surfaces of the two halves 102A and 102B.

In a preferred embodiment, a hinged connection is provided between said two lower 102A and upper 102B halves, more specifically a hinge 111 allows rotation of the upper half 102B on a vertical plane of apparatus 100. As can be seen, this technical solution is particularly advantageous when a highly automated production plant as the one disclosed in the above mentioned document WO 01/39963 is concerned because wide vertical spaces for movement of the possible robotized arm bearing the toroidal support 10 are required. Therefore, should a closing-opening solution of the vertical type be adopted the plant would take up a greater volumetric space.

A device for feeding working fluid is also provided to be associated with said apparatus 100, which device comprises at least one delivery duct 108 and one exhaust duct 109 to feed and discharge said working fluid under pressure respectively, such as air, nitrogen or other substantially inert gases at the inside of said cavity 110, in order to press from the outside to the inside as better described in the following, the inner surface of said tyre being processed against the outer surface of said toroidal support 10.

Said apparatus 100 further comprises a device for receiving said toroidal apparatus 10 carrying said tyre under processing in said cavity; said device may for example comprise a seating 112 for a shank 113 by which said toroidal support 10 is supported during its displacements within the plant in reference. Finally abutment surfaces 114 horizontally support the same support 10 wherein one of said surfaces is rigidly connected with the upper half 102B.

Preferably, the abutment surfaces 114 when the upper half 102B is in a closed condition, behave towards the toroidal support 10 they hold like two cheeks of a vulcanisation apparatus, i.e. they are in an abutment condition on the toroidal support shoulders thereby creating an annulus or circle ring around the tyre being processed which is supported by the same support.

Still more preferably, the abutment created by surfaces 114 is maintained in a pressed condition preferably by hydraulic devices. For example in the embodiment shown in Fig. 1, two pairs of hydraulic pistons 130, one linked to the upper half 102B, the other to the bedplate 103A, are able to exert pressure on the toroidal support 10 as above illustrated through the abutment surfaces 114, once the upper half 102B closes upon the lower half 102A.

Close to the inner side walls of said apparatus 100 and therefore at a radially external position to said toroidal support 10 when the latter is held within said cavity 110, a device is provided for generating heat at least on the surface of said toroidal support 10 and preferably also at the inside of said tyre being processed, therefore enabling partial vulcanisation of the latter, as already said.

More exactly, by "heat generation" herein and in the following claims it is intended a production of thermal energy directly "in situ" through conversion of energy coming from the outside, magnetic or electric energy for example. Preferably this heat generation takes place in the plant in accordance with the invention by magnetic induction, as briefly discussed in the following.

Preferably said device comprises an annular inductor 150 preferably having a C-shaped cross section. For heating said tyre under processing the magnetic field produced by the inductor is utilised, which inductor generates electric current by magnetic induction at least in the ferromagnetic parts of the toroidal support. By Joule effect this current generates heat at least in the support itself.

To enable an appropriate heat generation on the surface of said toroidal support carrying said tyre being processed, use of toroidal supports of metal material (steel or aluminium alloys) is provided, said material preferably being ferromagnetic (steel, for example) or non ferromagnetic (aluminium alloys, for example) preferably surface-coated with a layer of ferromagnetic material suitable to be brought to the appropriate temperature in a short period of time by said annular inductor 150.

Preferably, said toroidal support 10 is conveniently made up of a drum that can be dismantled, i.e. consisting of circumferential segments at least some of which are centripetally movable to disassemble the toroidal support itself and allow easy removal of same from the tyre when processing is over.

The toroidal support 10 further comprises at least one passage device associated with a duct (not shown) for connection to the surrounding atmosphere for example, and formed along the shank 113 of said support, to allow diffusion of a vulcanisation fluid under pressure within the same during the moulding and vulcanisation steps.

Said passage device is provided with appropriate branches formed in the toroidal support body and by which said fluid reaches a plurality of ducts opening onto the outer surface of the support 10 itself, suitably distributed and sizes on the circumferential extension thereof. Distribution and sizes will be of such a nature as to prevent introduction of raw elastomer material into said toroidal support 10.

The building process of a tyre carried out in the plant in reference contemplates manufacture of the carcass structure of the tyre itself in the first work stations.

The toroidal support 10 carrying said carcass structure 20 is then inserted, preferably by a robotized arm, into said hermetically sealed cavity 110 provided within apparatus 100. The apparatus is then closed and, due to the presence of duct 108, said working fluid is caused to flow within said cavity until a pressure preferably included between about 5 and about 15 bars is reached, to press the inner surface of said carcass structure 20 from the outside to the inside against the outer surface of said toroidal support 10. When the selected use pressure is reached, inductor 150 begins generating heat on the surface of the toroidal support 10, which heat is transferred to the carcass structure supported by the toroidal support itself. It will be appreciated that alternatively the inductor can be also activated concurrently with flowing of the working fluid within said cavity 110, so that heat supply can also start before the selected use pressure is reached.

In addition, the inductor generates heat on the metallic parts of the structure itself as well, therefore generally within the structure of each bead and more particularly in the bead cores, since the latter are preferably made of steel. Consequently, since heat generated on the surface of the toroidal support is transmitted to the carcass structure, it causes a partial vulcanisation of the latter in a period of time preferably included between about 2 and about 5 minutes.

Preferably this partial vulcanisation takes place at least on one of the component parts of said carcass structure, such as the innermost layer of the carcass structure, on part of the liner for example, and on the elastomer material employed as the filler in the structure of each bead.

Subsequently, through duct 109 the working fluid is drawn out of said hermetically sealed cavity, the atmospheric pressure is restored therein and inductor 150 is deactivated. Apparatus 100 is then opened and the toroidal support is extracted therefrom, preferably by a robotized arm, and is sent to subsequent work stations to complete building of the green tyre.

Alternatively, the inductor is deactivated before restoration of the atmospheric pressure, because the amount of heat generated on the toroidal support surface can already be sufficient for the intended purposes, therefore partial vulcanisation of the carcass structure can go on with the already reached temperatures, preferably included between about 100°C and about 200°C, and more preferably between about 110°C and about 150°C.

Preferably, the magnetic inductor power is included between about 25 KW and about 60 KW, and more preferably it is included between about 33 KW and about 38 KW.

Using this powers, the time during which the magnetic inductor is active is preferably included between about one minute and about six minutes, and more preferably it is included between about 2.5 minutes and 3.5 minutes. It is during this time that said heat generation takes place.

In the period of time during which building of the tyre is completed, the toroidal support goes on transmitting heat by thermal conduction to the tyre being processed thereby helping in completing vulcanisation of the radially innermost layers of the tyre and in starting a partial vulcanisation of the elements that are gradually laid on the toroidal support itself, in this way reducing the time of the moulding and vulcanisation operations to be carried out at the end of the tyre building.

Said moulding and vulcanisation operations preferably contemplate closure of the built tyre and the toroidal support 10 in a moulding cavity defined in a vulcanisation mould, said cavity having walls conforming in shape to an outer surface of the tyre when vulcanisation has been completed. Subsequently the tyre is moulded by pressing its outer surface against the walls of said cavity, while heat is supplied to the tyre itself, preferably by means of a vulcanisation fluid, as previously illustrated, to enable vulcanisation thereof.

In an alternative embodiment of the method in reference, association of the belt structure with the carcass structure of the tyre being processed may be carried out before starting partial vulcanisation within apparatus 100.

## Claims

1. A method of manufacturing pneumatic tyres for vehicle wheels, comprising the following steps:
- assembling a tyre being processed on a toroidal support (10) having an outer surface the shape of which substantially matches that of an inner surface of the tyre itself, building at least one carcass structure (20) on said support (10), said carcass structure (20) comprising a radially internal layer containing elastomer material in contact with the outer surface of the toroidal support (10), at least one carcass ply the ends of which are associated with at least one bead structure comprising at least one annular reinforcing structure and an elastomer filler;
- closing the toroidal support (10) and the tyre under processing assembled therewith into a hermetically sealed cavity (110);
- admitting a working fluid into said cavity (110) pressing the inner surface of said tyre being processed against the outer surface of said toroidal support (10);
- supplying heat to said tyre being processed to start vulcanisation of at least one elastomer element of the carcass structure (20) selected between said elastomer filler and said radially internal layer;
- extracting said toroidal support (10) carrying said tyre being processed from said cavity (110);
- completing building of the tyre being processed;
- closing the built tyre and the toroidal support (10) within a moulding cavity defined in a vulcanisation mould, said moulding cavity having walls conforming in shape to an outer surface of the tyre when vulcanisation has been completed;
- moulding the tyre by pressing it with its outer surface against the walls of the moulding cavity;
- supplying heat to the built tyre to vulcanise it.

2. A method as claimed in claim 1, wherein said tyre being processed comprises a belt structure associated with said carcass structure.

3. A method as claimed in claim 1, wherein said step of admitting said working fluid comes before said step of supplying heat to said tyre being processed.

4. A method as claimed in claim 1, wherein said step of admitting said working fluid takes place substantially concurrently with said step of supplying heat to said tyre being processed.

5. A method as claimed in claim 1, wherein said step of supplying heat takes place by heat generation on the surface of said toroidal support (10).

6. A method as claimed in claim 1, wherein said step of supplying heat takes place by heat generation at the inside of said tyre being processed.

7. A method as claimed in claim 5, wherein said heat generation occurs by magnetic induction over a period of time included between about one minute and about six minutes.

8. A method as claimed in claim 5, wherein pressure generated by said fluid in said hermetically sealed cavity is included between about 5 and about 15 bars.

9. A plant for manufacturing pneumatic tyres, comprising:
- at least one building station comprising an automated apparatus for handling a toroidal support (10) on which each green tyre is built, said toroidal support having an outer surface the shape of which substantially matches that of an inner surface of the tyre itself;
- at least one apparatus (100) to carry out a partial vulcanisation of said green tyre being processed, said apparatus comprising: at least one hermetically sealed cavity (110) set to receive the toroidal support (10) carrying the tyre being processed, at least one heating device to generate heat at least on the surface of the toroidal support (10), at least one device for feeding working fluid under pressure, associated with said cavity (110), to press the radially internal surface of the tyre being processed against the radially external surface of said toroidal support (10);
- at least one apparatus for vulcanising and moulding said green tyre once it has been built.

10. A plant as claimed in claim 9, wherein said heating device comprises at least one magnetic inductor (150).

11. A plant as claimed in claim 9 wherein said toroidal support (10) has an outer surface of ferromagnetic material.

12. A plant as claimed in claim 9, wherein said hermetically sealed cavity (110) is delimited by a lower half (102A) and an upper half (102B) of said apparatus (100).

13. A plant as claimed in claim 12, wherein said upper half (102B) is linked to said lower half (102A) by at least one hinge (111) enabling rotation of same on the vertical plane of said apparatus (100).

14. A plant as claimed in claim 12, wherein at least one sealing element (107) is provided between the opposite surfaces of said lower (102A) and upper (102B) halves.

15. A plant as claimed in claim 10, wherein said magnetic inductor (150) is an annular inductor having a C-shaped transverse section and placed close to the inner side walls of said apparatus (100).

16. A plant as claimed in claim 10, wherein said magnetic inductor (150) has a power included between about 25 KW and about 60 KW.

17. A plant as claimed in claim 9, wherein said device for feeding working fluid contemplates the presence of a delivery duct (10) and an exhaust duct (109).

18. A plant as claimed in claim 12, wherein abutment surfaces (114) are provided to horizontally support said toroidal support (10) within said cavity (110).

19. A plant as claimed in claim 18, wherein said abutment surfaces (114) are operatively associated with hydraulic devices to exert pressure on the shoulder regions of said toroidal support (10).

20. A plant as claimed in claim 19, wherein said hydraulic devices comprise two pairs of pistons (130), a first pair associated with said upper half (102B), a second pair associated with a bedplate (103A).

21. An apparatus (100) for carrying out a partial vulcanisation of a green pneumatic tyre being processed, said apparatus comprising: at least one hermetically sealed cavity (110) set to receive a toroidal support (10) carrying the tyre being processed, at least one heating device to generate heat at least on the surface of the toroidal support (10), at least one device for feeding a working fluid under pressure and associated with said cavity (110) to press the radially internal surface of the tyre being processed against the radially external surface of said toroidal support (10).

22. An apparatus as claimed in claim 21, wherein said heating device comprises at least one magnetic inductor (150).

23. An apparatus as claimed in claim 21, wherein said toroidal support (10) has a surface of ferromagnetic material.

24. An apparatus as claimed in claim 22, wherein said magnetic inductor (150) is an annular inductor having a C-shaped cross section and placed close to the inner side walls of said apparatus (100).

25. An apparatus as claimed in claim 22, wherein said magnetic inductor (150) has a power included between about 25 KW and about 60 KW.

26. An apparatus as claimed in claim 21, wherein said hermetically sealed cavity (110) is delimited by a lower half (102A) and an upper half (102B) of said apparatus (100).

27. An apparatus as claimed in claim 26, wherein said upper half (102B) is linked to said lower half (102A) through at least one hinge (111) enabling rotation of same on a vertical plane of said apparatus (100).

28. An apparatus as claimed in claim 26, wherein at least one sealing element (107) is provided between the opposite surfaces of said lower (102A) and upper (102B) halves.

29. An apparatus as claimed in claim 21, wherein said device for feeding said working fluid contemplates the presence of a delivery duct (108) and an exhaust duct (109).

30. An apparatus as claimed in claim 26, wherein abutment surfaces (114) for horizontally supporting said toroidal support (10) within said cavity (110) are provided.

31. An apparatus as claimed in claim 30, wherein said abutment surfaces (114) are operatively associated with hydraulic devices to exert pressure on the shoulder regions of said toroidal support (10).

32. An apparatus as claimed in claim 31, wherein said hydraulic devices comprise two pairs of pistons (130), a first pair associated with said upper half (102B), a second pair associated with a bedplate (103A).

## Patentansprüche

1. Verfahren zur Herstellung von Luftreifen für Fahrzeugräder, wobei das Verfahren die folgenden Schritte aufweist:
- Zusammenbauen eines herzustellenden Reifens auf einem torusförmigen Träger (10), der eine äußere Oberfläche hat, deren Form im Wesentlichen der einer inneren Oberfläche des Reifens entspricht,
- Aufbauen wenigstens eines Karkassenaufbaus (20) auf dem Träger (10), wobei der Karkassenaufbau (20) eine ein elastomeres Material enthaltende radiale innere Schicht, die in Kontakt mit der äußeren Oberfläche des torusförmigen Trägers (10) steht, und wenigstens eine Karkassenlage aufweist, deren Enden wenigstens einem Wulstaufbau zugeordnet sind, der wenigstens einen ringförmigen Verstärkungsaufbau und einen elastomeren Füller hat,
- Einschließen des torusförmigen Trägers (10) und des mit ihm zusammengefügten in Herstellung befindlichen Reifens in einen hermetisch abgedichteten Hohlraum (110),
- Zuführen eines Arbeitsfluids in den Hohlraum (110), wobei die innere Oberfläche des in Herstellung befindlichen Reifens gegen die äußere Oberfläche des torusförmigen Trägers (10) gedrückt wird,
- Zuführen von Wärme zu dem in Herstellung befindlichen Reifen für den Beginn der Vulkanisierung wenigstens eines elastomeren Elements des Karkassenaufbaus (20) ausgewählt zwischen dem elastomeren Füller und der radial inneren Schicht,
- Herausziehen des den in Herstellung befindlichen Reifen tragenden torusförmigen Trägers (10) aus dem Hohlraum (110),
- Vollenden des Aufbaus des in Herstellung befindlichen Reifens,
- Einschließen des aufgebauten Reifens und des torusförmigen Trägers (10) in einen Formhohlraum, der in einer Vulkanisierform ausgebildet ist und Wände hat, die der Form einer äußeren Oberfläche des Reifens entsprechen, wenn die Vulkanisierung abgeschlossen ist,
- Ausformen des Reifens, indem er mit seiner äußeren Oberfläche gegen die Wände des Formhohlraums gedrückt wird, und
- Zuführen von Wärme zu dem aufgebauten Reifen für seine Vulkanisierung.

2. Verfahren nach Anspruch 1, bei welchem der in Herstellung befindliche Reifen einen Gurtaufbau aufweist, der mit dem Karkassenaufbau verbunden wird.

3. Verfahren nach Anspruch 1, bei welchem der Schritt des Zuführens des Arbeitsfluids vor dem Schritt des Zuführens von Wärme zu dem in Herstellung befindlichen Reifen kommt.

4. Verfahren nach Anspruch 1, bei welchem der Schritt des Zuführens des Arbeitsfluids im Wesentlichen gleichzeitig zu dem Schritt des Zuführens von Wärme zu dem in Herstellung befindlichen Reifen erfolgt.

5. Verfahren nach Anspruch 1, bei welchem der Schritt des Zuführens von Wärme durch Erzeugen von Wärme auf der Oberfläche des torusförmigen Trägers (10) erfolgt.

6. Verfahren nach Anspruch 1, bei welchem der Schritt des Zuführens von Wärme durch Erzeugung von Wärme auf der Innenseite des in Herstellung befindlichen Reifens erfolgt.

7. Verfahren nach Anspruch 5, bei welchem die Erzeugung von Wärme durch magnetische Induktion über einem Zeitraum zwischen etwa einer Minute und etwas sechs Minuten erfolgt.

8. Verfahren nach Anspruch 5, bei welchem der durch das Fluid in dem hermetisch abgedichteten Hohlraum erzeugte Druck zwischen etwa 5 und etwa 15 bar liegt.

9. Anlage zur Herstellung von Luftreifen
- mit wenigstens einer Aufbaustation, die eine automatisierte Vorrichtung zum Handhaben eines torusförmigen Trägers (10) aufweist, auf welchem jeder Rohreifen aufgebaut wird, wobei der torusförmige Träger eine äußere Oberfläche hat, deren Form im Wesentlichen der einer inneren Oberfläche des Reifens entspricht,
- mit wenigstens einer Vorrichtung (100) zur Ausführung einer teilweisen Vulkanisierung des in Herstellung befindlichen Rohreifens, wobei die Vorrichtung wenigstens einen hermetische abgedichteten Hohlraum (110), der für die Aufnahme des den herzustellenden Reifen tragenden torusförmigen Trägers (10) vorgesehen ist, wenigstens eine Heizvorrichtung zum Erzeugen von Wärme wenigstens auf der Oberfläche des torusförmigen Trägers (10), und wenigstens eine mit dem Hohlraum (110) verbundene Vorrichtung zum Zuführen eines unter Druck stehenden Arbeitsfluids aufweist, um die radial innere Oberfläche des in Herstellung befindlichen Reifens gegen die radial äußere Oberfläche des torusförmigen Trägers (10) zu drücken, und
- mit wenigstens einer Vorrichtung zum Vulkanisieren und Ausformen des Rohreifens, sobald er aufgebaut worden ist.

10. Anlage nach Anspruch 9, bei welcher die Heizvorrichtung wenigstens einen magnetischen Induktor (150) aufweist.

11. Anlage nach Anspruch 9, bei welcher der torusförmige Träger (10) eine äußere Oberfläche aus ferromagnetischem Material hat.

12. Anlage nach Anspruch 9, bei welcher der hermetische abgedichtete Hohlraum (110) von einer unteren Hälfte (102A) und einer oberen Hälfte (102B) der Vorrichtung (100) begrenzt ist.

13. Anlage nach Anspruch 12, bei welcher die obere Hälfte (102B) mit der unteren Hälfte (102A) durch wenigstens ein Gelenk (111) verbunden ist, das seine Drehung auf der vertikalen Ebene der Vorrichtung (100) ermöglicht.

14. Anlage nach Anspruch 12, bei welcher wenigstens ein Dichtungselement (107) zwischen den gegenüberliegenden Flächen der unteren Hälfte (102A) und der oberen Hälfte (102B) vorgesehen ist.

15. Anlage nach Anspruch 10, bei welcher der magnetische Induktor (150) ein Ringinduktor ist, der einen C-förmigen Querabschnitt hat und nahe an der inneren Seitenwand der Vorrichtung (100) angeordnet ist.

16. Anlage nach Anspruch 10, bei welcher der magnetische Induktor (150) eine Leistung zwischen etwa 25 kW und etwa 60 kW hat.

17. Anlage nach Anspruch 9, bei welcher an der Vorrichtung zur Zuführung von Arbeitsfluid eine Förderleitung (108) und eine Abführleitung (109) vorhanden sind.

18. Anlage nach Anspruch 12, bei welcher Widerlagerflächen (114) vorgesehen sind, um den torusförmigen Träger (10) in dem Hohlraum (110) horizontal zu halten.

19. Anlage nach Anspruch 18, bei welcher die Widerlagerflächen (114) funktionsmäßig Hydraulikvornchtungen zugeordnet sind, um einen Druck auf die Schulterbereiche des torusförmigen Trägers (10) auszuüben.

20. Anlage nach Anspruch 19, bei welcher die Hydraulikvorrichtungen zwei Paare von Kolben (130) aufweisen, von denen das erste Paar der oberen Hälfte (102B) und das zweite Paar einer Basisplatte (103A) zugeordnet sind.

21. Vorrichtung (100) zur Ausführung einer Vulkanisierung eines in Herstellung befindlichen rohen Luftreifens, wobei die Vorrichtung wenigstens einen hermetisch abgedichteten Hohlraum (110), der für die Aufnahme eines den in Herstellung befindlichen Reifen tragenden torusförmigen Trägers (10) vorgesehen ist, wenigstens eine Heizvorrichtung zum Erzeugen von Wärme wenigstens an der Oberfläche des torusförmigen Trägers (10), und wenigstens eine dem Hohlraum (110) zugeordnete Vorrichtung zum Zuführen eines unter Druck stehenden Arbeitsfluids aufweist, um die radial innere Oberfläche des in Herstellung befindlichen Reifens gegen die radial äußere Oberfläche des torusförmigen Trägers (10) zu drücken.

22. Vorrichtung nach Anspruch 21, bei welcher die Heizvorrichtung wenigstens einen magnetischen Induktor (150) aufweist.

23. Vorrichtung nach Anspruch 21, bei welcher der torusförmige Träger (10) eine Oberfläche aus ferromagnetischem Material hat.

24. Vorrichtung nach Anspruch 22, bei welcher der magnetische Induktor (150) ein Ringinduktor ist, der einen C-förmigen Querschnitt hat und nahe an den inneren Seitenwänden der Vorrichtung (100) angeordnet ist.

25. Vorrichtung nach Anspruch 22, bei welcher der magnetische Induktor (150) eine Leistung zwischen etwa 25 kW und etwa 60 kW hat.

26. Vorrichtung nach Anspruch 21, bei welcher der hermetische abgedichtete Hohlraum (110) von einer unteren Hälfte (102A) und einer oberen Hälfte (102B) der Vorrichtung (100) begrenzt ist.

27. Vorrichtung nach Anspruch 26, bei welcher die obere Hälfte (102B) mit der unteren Hälfte (102A) durch wenigstens ein Gelenk (111) verbunden ist, das seine Drehung auf einer vertikalen Ebene der Vorrichtung (100) ermöglicht.

28. Vorrichtung nach Anspruch 26, bei welcher wenigstens ein Dichtungselement (107) zwischen den gegenüberliegenden Flächen der unteren Hälfte (102A) und der oberen Hälfte (102B) vorgesehen ist.

29. Vorrichtung nach Anspruch 21, bei welcher an der Vorrichtung zur Zuführung des Arbeitsfluids eine Förderleitung (108) und eine Abführleitung (109) vorhanden sind.

30. Vorrichtung nach Anspruch 26, bei welcher Widerlagerflächen (114) vorgesehen sind, um den torusförmigen Träger (10) in dem Hohlraum (110) horizontal zu halten.

31. Vorrichtung nach Anspruch 30, bei welcher die Widerlagerflächen (114) funktionsmäßig Hydraulikvorrichtungen zugeordnet sind, um einen Druck auf die Schulterbereiche des torusförmigen Trägers (10) auszuüben.

32. Vorrichtung nach Anspruch 31, bei welcher die Hydraulikvorrichtungen zwei Paare von Kolben (130) aufweisen, von denen das erste Paar der oberen Hälfte (102B) und das zweite Paar einer Basisplatte (103A) zugeordnet sind.

## Revendications

1. Procédé de fabrication de pneus pour roues de véhicule, comprenant les étapes consistant à :
- assembler un pneu traité sur un support toroïdal (10) ayant une surface extérieure dont la forme s'adapte substantiellement à celle d'une surface intérieure du pneu lui-même, en construisant au moins une structure de carcasse (20) sur ledit support (10), ladite structure de carcasse (20) comprenant une couche radialement interne contenant un matériau élastomère en contact avec la surface extérieure du support toroïdal (10), au moins une nappe de carcasse dont les extrémités sont associées à au moins une structure de talon comprenant au moins une structure de renforcement annulaire et une charge élastomère ;
- fermer le support toroïdal (10) et le pneu en cours de traitement assemblé avec celui-ci en une cavité scellée hermétiquement (110) ;
- admettre un fluide de travail dans ladite cavité (110) pressant la surface intérieure dudit pneu en cours de traitement contre la surface extérieure dudit support toroïdal (10) ;
- fournir de la chaleur audit pneu traité pour démarrer la vulcanisation d'au moins un élément en élastomère de la structure de carcasse (20) choisi entre ladite charge élastomère et ladite couche radialement interne ;
- extraire ledit support toroïdal (10) portant ledit pneu traité de ladite cavité (110) ;
- achever la construction du pneu traité ;
- fermer le pneu construit et le support toroïdal (10) à l'intérieur d'une cavité de moulage définie dans un moule à vulcaniser, ladite cavité de moulage ayant des parois dont la forme s'adapte à une surface extérieure du pneu lorsque la vulcanisation a été achevée ;
- mouler le pneu en le pressant avec sa surface extérieure contre les parois de la cavité de moulage ;
- fournir de la chaleur au pneu construit pour le vulcaniser.

2. Procédé selon la revendication 1, dans lequel ledit pneu en cours de traitement comprend une structure de ceinture associée à ladite structure de carcasse.

3. Procédé selon la revendication 1, dans lequel ladite étape d'admission du fluide de travail vient avant ladite étape consistant à fournir de la chaleur audit pneu en cours de traitement.

4. Procédé selon la revendication 1, dans lequel ladite étape d'admission du fluide de travail a lieu substantiellement simultanément à ladite étape consistant à fournir de la chaleur audit pneu en cours de traitement.

5. Procédé selon la revendication 1, dans lequel ladite étape consistant à fournir de la chaleur se fait par génération de chaleur sur la surface dudit support toroïdal (10).

6. Procédé selon la revendication 1, dans lequel ladite étape consistant à fournir de la chaleur se fait par génération de chaleur à l'intérieur dudit pneu traité.

7. Procédé selon la revendication 5, dans lequel ladite génération de chaleur se fait par induction magnétique pendant un intervalle de temps compris entre une minute environ et six minutes environ.

8. Procédé selon la revendication 5, dans lequel la pression produite par ledit fluide dans ladite cavité scellée hermétiquement est comprise entre 5 bars environ et 15 bars environ.

9. Installation pour fabriquer des pneus, comprenant:
- au moins une station d'assemblage comprenant un appareil automatisé pour manipuler un support toroïdal (10) sur lequel chaque pneu cru est assemblé, ledit support toroïdal ayant une surface extérieure dont la forme s'adapte substantiellement à celle d'une surface intérieure du pneu lui-même ;
- au moins un appareil (100) pour effectuer une vulcanisation partielle dudit pneu cru traité, ledit appareil comprenant : au moins une cavité scellée hermétiquement (110) conçue pour recevoir le support toroïdal (10) portant le pneu traité, au moins un dispositif de chauffage pour générer de la chaleur au moins sur la surface du support toroïdal (10), au moins un dispositif pour amener du fluide de travail sous pression, associé à ladite cavité (110), pour presser la surface radialement interne du pneu traité contre la surface radialement externe dudit support toroïdal (10) ;
- au moins un appareil pour vulcaniser et mouler ledit pneu cru une fois qu'il a été assemblé.

10. Installation selon la revendication 9, dans laquelle ledit dispositif de chauffage comprend au moins une bobine d'induction magnétique (150).

11. Installation selon la revendication 9, dans laquelle ledit support toroïdal (10) a une surface extérieure en matériau ferromagnétique.

12. Installation selon la revendication 9, dans laquelle ladite cavité scellée hermétiquement (110) est délimité par une moitié inférieure (102A) et une moitié supérieure (102B) dudit appareil (100).

13. Installation selon la revendication 12, dans laquelle ladite moitié supérieure (102B) est liée à ladite moitié inférieure (102A) par au moins une articulation (111) qui permet la rotation de cette dernière sur le plan vertical dudit appareil (100).

14. Installation selon la revendication 12, dans laquelle au moins un élément d'étanchéité (107) est placé entre les surfaces opposées desdites moitié inférieure (102A) et supérieure (102B).

15. Installation selon la revendication 10, dans laquelle ladite bobine d'induction magnétique (150) est une bobine d'induction annulaire ayant une section transversale en forme de C et placée à proximité des parois latérales intérieures dudit appareil (100).

16. Installation selon la revendication 10, dans laquelle ladite bobine d'induction magnétique (150) a une puissance comprise entre 25 KW environ et 60 KW environ.

17. Installation selon la revendication 9, dans laquelle ledit dispositif pour amener du fluide de travail prévoit la présence d'un conduit de distribution (10) et d'un conduit d'échappement (109).

18. Installation selon la revendication 12, dans laquelle des surfaces d'appui (114) sont prévues pour supporter horizontalement ledit support toroïdal (10) à l'intérieur de ladite cavité (110).

19. Installation selon la revendication 18, dans laquelle lesdites surfaces d'appui (114) sont associées fonctionnellement à des dispositifs hydrauliques pour exercer une pression sur les régions d'épaulement dudit support toroïdal (10).

20. Installation selon la revendication 19, dans laquelle lesdits dispositifs hydrauliques comprennent deux paires de pistons (130), une première paire associée à ladite moitié supérieure (102B), une deuxième paire associée à une plaque de bâti (103A).

21. Appareil (100) pour effectuer une vulcanisation partielle d'un pneu cru en cours de traitement, ledit appareil comprenant : au moins une cavité scellée hermétiquement (110) conçue pour recevoir un support toroïdal (10) portant le pneu traité, au moins un dispositif de chauffage pour générer de la chaleur au moins sur la surface du support toroïdal (10), au moins un dispositif pour amener du fluide de travail sous pression et associé à ladite cavité (110) pour presser la surface radialement interne du pneu traité contre la surface radialement externe dudit support toroïdal (10).

22. Appareil selon la revendication 21, dans lequel ledit dispositif de chauffage comprend au moins une bobine d'induction magnétique (150).

23. Appareil selon la revendication 21, dans lequel ledit support toroïdal (10) a une surface en matériau ferromagnétique.

24. Appareil selon la revendication 22, dans lequel ladite bobine d'induction magnétique (150) est une bobine d'induction annulaire ayant une section transversale en forme de C et placée à proximité des parois latérales intérieures dudit appareil (100).

25. Appareil selon la revendication 22, dans lequel ladite bobine d'induction magnétique (150) a une puissance comprise entre 25 KW environ et 60 KW environ.

26. Appareil selon la revendication 21, dans lequel ladite cavité scellée hermétiquement (110) est délimité par une moitié inférieure (102A) et une moitié supérieure (102B) dudit appareil (100).

27. Appareil selon la revendication 26, dans lequel ladite moitié supérieure (102B) est liée à ladite moitié inférieure (102A) par au moins une articulation (111) qui permet la rotation de cette dernière sur un plan vertical dudit appareil (100).

28. Appareil selon la revendication 26, dans lequel au moins un élément d'étanchéité (107) est placé entre les surfaces opposées desdites moitié inférieure (102A) et supérieure (102B).

29. Appareil selon la revendication 21, dans lequel ledit dispositif pour amener ledit fluide de travail prévoit la présence d'un conduit de distribution (108) et d'un conduit d'échappement (109).

30. Appareil selon la revendication 26, dans lequel des surfaces d'appui (114) sont prévues pour supporter horizontalement ledit support toroïdal (10) à l'intérieur de ladite cavité (110).

31. Appareil selon la revendication 30, dans lequel lesdites surfaces d'appui (114) sont associées fonctionnellement à des dispositifs hydrauliques pour exercer une pression sur les régions d'épaulement dudit support toroïdal (10).

32. Appareil selon la revendication 31, dans lequel lesdits dispositifs hydrauliques comprennent deux paires de pistons (130), une première paire associée à ladite moitié supérieure (102B), une deuxième paire associée à une plaque de bâti (103A).
